# EUROPÄISCHE PATENTSCHRIFT

(11) **EP 1 068 504 B1**
(45) Veröffentlichungstag und Bekanntmachung des Hinweises auf die Patenterteilung: **09.07.2003**
(21) Anmeldenummer: 99904882.0
(22) Anmeldetag: 17.02.1999
(51) Int. Cl.: G01M 17/007

(54) **BETÄTIGUNGSANORDNUNG UND VERFAHREN ZUR GESCHWINDIGKEITS- UND/ODER LAGEBEEINFLUSSUNG VON SELBSTFAHRENDEN CRASHFAHRZEUGEN**
ACTUATING SYSTEM AND METHOD FOR INFLUENCING THE SPEED AND/OR POSITION OF SELF-DRIVING CRASH TEST VEHICLES
SYSTEME D'ACTIONNEMENT ET PROCEDE POUR INFLUER SUR LA VITESSE ET/OU LA POSITION DE VEHICULES SANS CHAUFFEUR UTILISES POUR DES ESSAIS DE CHOCS

(30) Priorität: 02.04.1998 DE 19814846
(43) Veröffentlichungstag der Anmeldung: 17.01.2001
(73) Patentinhaber: Volkswagen Aktiengesellschaft, 38436 Wolfsburg (DE)
(72) Erfinder: WEISER, Florian, D-38462 Ehra-Lessien (DE)
(86) Internationale Anmeldenummer: EP9901038
(87) Internationale Veröffentlichungsnummer: WO99051959

(56) Entgegenhaltungen:
- DE-A- 4 006 433
- DE-A- 19 505 845
- US-A- 5 012 689
- US-A- 5 415 034
- US-A- 5 430 645
- US-A- 5 602 450
- US-A- 5 635 624
- PATENT ABSTRACTS OF JAPAN vol. 095, no. 010, 30. November 1995 & JP 07 184406 A (SEIBUTSUKEI TOKUTEI SANGYO GIJUTSU KENKYU SUISHIN KIKO), 25. Juli 1995

## Beschreibung

Die Erfindung betrifft eine Betätigungsanordnung zur Geschwindigkeits- und/oder Lagebeeinflussung von selbstfahrenden Crashfahrzeugen, wobei eine nachgerüstete Steuerelektronik zum selbsttätigen Steuern des Crashfahrzeuges in diesem vorgesehen ist, gemäß dem Oberbegriff des Anspruchs 1. Die Erfindung betrifft femer ein Verfahren zur Geschwindigkeits- und/oder Lagebeeinflussung von selbstfahrenden Crashfahrzeugen, gemäß dem Oberbegriff des Anspruchs 6.

Aus der DE 40 27 711 C2 ist ein Verfahren und eine Vorrichtung zum Überprüfen von Wirkungen eines Kraftfahrzeuges bekannt Derartige Verfahren werden üblicherweise als "Crashtest" bezeichnet. Mindestens ein Kraftfahrzeug wird mit einer vorbestimmten Geschwindigkeit an einen vorab definierten Kollisionspunkt geführt, wobei ein fahrzeugeigener Antrieb verwendet wird. Hierzu sind der bordeigene Fahrzeugantrieb, eine eventuelle Kupplung sowie eine Bremse durch Stellglieder mit einem Druckmittelbetätigungssystem verbunden, welches neben einem Vorratsbehälter selektiv ansprechbare Ventile aufweist. Dies erfordert zur Einflußnahme auf die Geschwindigkeit des Fahrzeugs jedoch aufwendige und kostenintensive Vorrichtungen, welche ggf. nach einem Crash zerstört sind oder ggf. crashfest ausgebildet werden müssen. Femer können nur druckgesteuerte Betätigungen erfolgen, wobei entsprechend drucksteuerbare Ventile parallel zu fahrzeugeigenen mechanischen Stellgliedern nachgerüstet werden müssen. Dies ist teuer, umständlich und zeitaufwendig.

Aus der DE 40 06 433 A1 ist eine Vorrichtung und ein Verfahren zum Überprüfen von Wirkungen eines Kraftfahrzeugunfalls bekannt, bei dem wenigstens ein Kraftfahrzeug an einen vorher definierten Kollisionspunkt geführt wird. Das Kraftfahrzeug wird ferngesteuert gemäß vorgegeben Bewegungsparametem geführt, wobei ein Speicher mit Soll-Werten für diese Bewegungsparameter vorgesehen ist. Das oder die Fahrzeuge werden an einem Leitkabel auf einem vorbestimmten Weg geführt. Dieses Leitkabel ist an oder in einer Fahrbahn angeordnet. Durch entsprechende Triggermarken am Leitkabel erfolgt eine Synchronisation von mehreren Fahrzeugen, welche auf einen gemeinsamen Kollisionspunkt zufahren und dort gleichzeitig ankommen sollen. Ein Bordregler steuert hierbei zusätzlich nachgerüstete Stellglieder, welche fahrzeugeigene manuelle Bedienungseinrichtung ersetzten.

Die DE-AS 21 52 752 lehrt längs neben der Fahrbahn Frequenzsignale abgebende Sollwertgeber für eine Fahrzeuggeschwindigkeit anzuordnen, welche von einem am Fahrzeug selbst angeordneten Empfänger ausgelesen werden. Eine Stellvorrichtung für den Fahrzeugantrieb regelt entsprechend dieser Frequenzsignale eine Fahrzeuggeschwindigkeit. Diese Stellvorrichtung ist ein Servomotor, welcher auf ein Drosselventil des Antriebs wirkt. Der Einbau des Servomotors ist jedoch zeitaufwendig und umständlich. Meist ist am Ort des Drosselventils wenig Bauraum vorhanden, so daß der Servomotor sehr klein ausgeführt werden muß und sich der Einbau entsprechend schwierig gestaltet.

Aus der DE-OS 26 42 211 ist eine Abstandswamanlage für Fahrzeuge bekannt. Hierbei wird aus Fahrgeschwindigkeit des Fahrzeugs, einem Abstand des Fahrzeugs zu einem vorausbefindlichen anderen Fahrzeug oder Hindernis und einer Annäherungsgeschwindigkeit an ein anderes Fahrzeug oder Hindemis eine zur Vermeidung von Kollisionen erforderliche Bremsverzögerung bzw. Sollverzögerung laufend ermittelt und diese Größe zur Beeinflussung oder Steuerung des Abstandes herangezogen.

Die DE-OS 26 46 588 beschreibt eine Einrichtung zur Geschwindigkeitssteuerung gleisloser Fahrzeuge. Das Fahrzeug wird an einem Leitkabel geführt. Zur Geschwindigkeitssteuerung ist ein zweites Kabel vorgesehen, das in Fahrtrichtung periodisch sich ändernde seitliche Abstände zum Leitkabel aufweist. In einem Sensor im Fahrzeug ergeben sich daraus entsprechende Impulse für eine Geschwindigkeitssteuerung.

Aus der DE 28 19 070 C2 ist eine elektrische Stellvorrichtung, insbesondere für eine Geschwindigkeitsregeleinrichtung für Kraftfahrzeuge bekannt. Hierbei ist ein speziell ausgebildetes Getriebe zwischen einem Stellorgan und einem Stellmotor vorgesehen.

Die DE 38 41 723 A1 beschreibt eine elektronische Drosselklappe, wobei zur Vereinfachung einer mechanischen Anordnung ein Elektroantrieb für die Drosselklappe in eine Drehachse oder einer Klappe der Drosselklappe eingebaut ist.

Aus der DE 31 42 409 C2 ist ein Verfahren und eine Vorrichtung zur Regelung der Drehzahl einer Brennkraftmaschine bekannt. Hierbei wird einem Regler ein Proportional- und ein Integralanteil eines Abweichungssignals zwischen Soll- und Istwert einer Drehzahl zugeführt, wobei ein Sollwert entsprechend nachgeführt wird.

Der vorliegenden Erfindung liegt daher die Aufgabe zugrunde, eine verbesserte Betätigungsanordnung der obengenannten Art und ein verbessertes Verfahren der o.g. Art zur Verfügung zu stellen, wobei die obengenannten Nachteile überwunden werden.

Diese Aufgabe wird erfindungsgemäß durch eine Betätigungsanordnung nach dem Anspruch 1 und durch ein Verfahren nach dem Anspruch 6 gelöst. Vorteilhafte Ausgestaltungen der Erfindung sind in den abhängigen Ansprüchen angegeben.

Dazu ist es bei einer Betätigungsanordnung erfindungsgemäß vorgesehen, daß die Steuerelektronik mit wenigstens einer fahrzeugeigenen manuellen Bedienungseinrichtung verbunden ist.

Dies hat den Vorteil, daß eine wesentlich vereinfachte selbsttätige bzw. ferngesteuerte Steuerung erzielt wird, da keine aufwendigen Stellglieder erforderlich sind, welche fahrzeugeigene manuelle Bedienungseinrichtungen ersetzten. Ferner ergibt sich eine im Detail wirklichkeitsnähere Nachstellung von Kraftfahrzeugunfällen, da die fahrzeugeigene manuelle Bedienungseinrichtungen betätigt werden.

Beispielsweise ist die fahrzeugeigene manuelle Bedienungseinrichtung ein Fahrpedal, ein Lenkrad, ein Bremspedal, ein Kupplungspedal oder ein Schalthebel.

In einer besonders bevorzugten Ausführungsform ist zwischen der Steuerelektronik und der manuellen Bedienungseinrichtung ein Aktuator, insbesondere ein elektromechanischer oder elektropneumatischer Aktuator, angeordnet, welcher elektrisch mit der Steuerelektronik und mechanisch mit der manuellen Bedienungseinrichtung verbunden.

Zweckmäßigerweise umfaßt die mechanische Verbindung zwischen Aktuator und manueller Bedienungseinrichtung wenigstens einen Seilzug und ggf. wenigstens eine Umlenkrolle.

In einer besonders bevorzugten Ausführungsform ist die Steuerelektronik ein Empfänger einer Femsteuerung.

Bei einem Verfahren der o.g. Art ist es erfindungsgemäß vorgesehen, daß wenigstens eine fahrzeugeigene manuelle Bedienungseinrichtung angesteuert wird.

Dies hat den Vortell, daß eine wesentlich vereinfachte selbsttätige bzw. femgesteuerte Steuerung erzielt wird, da keine aufwendigen Stellglieder erfordertich sind, welche fahrzeugeigene manuelle Bedienungseinrichtungen ersetzten. Ferner ergibt sich eine im Detail wirklichkeitsnähere Nachstellung von Kraftfahrzeugunfällen, da die fahrzeugeigene manuelle Bedienungseinrichtungen betätigt werden.

Beispielsweise ist die fahrzeugeigene manuelle Bedienungseinrichtung ein Fahrpedal, ein Lenkrad, ein Bremspedal, ein Kupplungspedal oder ein Schalthebel.

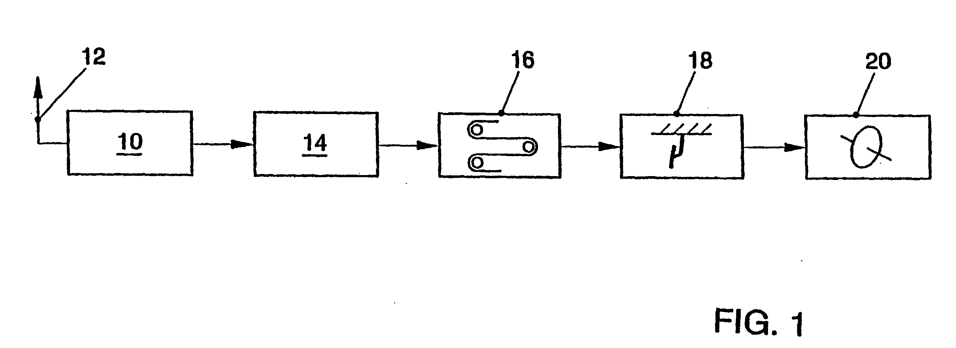

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnung. Diese zeigt in der einzigen Fig. ein Blockschaltbild einer bevorzugten Ausführungsform einer erfindungsgemäßen Betätigungsanordnung

Die in der einzigen Fig. beispielhaft dargestellte erste bevorzugten Ausführungsform einer erfindungsgemäßen Betätigungsanordnung umfaßt eine Steuerelektronik 10 in Form einer Femsteuerelektronik 10 mit einer Antenne 12, welche als zusätzliches Bauteil in ein Crashfahrzeug einzubauen ist. Über eine entsprechende Funkverbindung empfängt die Femsteuerelektronik 10 entsprechende Daten für eine gewünschte Lage und/oder Geschwindigkeit des Crashfahrzeuges und wirkt dementsprechend auf fahrzeugeigene manuelle Bedienungseinrichtungen ein. Hierzu ist die Fernsteuerelektronik 10 mit einem Aktuator 14 verbunden, welcher beispielsweise ein elektromechanischer oder elektropneumatischer Aktuator ist.

Dieser wirkt seinerseits beispielsweise über einen entsprechenden Seilzug- und/oder Rollenmechanismus 16 auf eine manuelle, fahrzeugeigene Bedieneinrichtung 18, d.h. auf eine Bedieneinrichtung welche standardmäßig in einen Kraftfahrzeug zur manuellen Bedienung durch beispielsweise einen Fahrer bereits enthalten ist, wie beispielsweise ein Fahrpedal, ein Bremspedal, ein Kupplungspedal, einen Schalthebel oder ähnliches. Dies hat den Vorteil, daß keine zusätzlichen Stellorgane mehr installiert werden müssen, da entsprechend vorhandene Stellorgane bzw. Betätigungsorgane von den Bedienungseinrichtungen betätigt und damit direkt von der Steuerelektronik 10 verwendet werden. Der Seilzug-/Rollenmechanismus 16 ist einfach auf die jeweilige Bedieneinrichtung 18 abgestimmt ausgebildet. So ist beispielsweise für die Betätigung des Bremspedal ein einfacher Bowdenzug geeignet.

Bei der in der einzigen Fig. dargestellten Ausführungsform ist die Fahrzeugeigene manuelle Bedieneinrichtung ein Fahrpedal 18, so daß der Aktuator 14 indirekt auf ein Betätigungsorgan 20 für eine Fahrzeugfunktion, wie beispielsweise eine Drosselklappe einer Brennkraftmaschine einwirkt, so daß ein Motordrehmoment einstellbar ist.

Wahlweise kann die Femsteuerelektronik 10 unabhängig von der jeweiligen Ausführungsform der erfindungsgemäßen Betätigungsanordnung einen nicht dargestellten Eingang für Istwerte bzgl. Lage und/oder Geschwindigkeit des Crashfahrzeuges aufweisen, so daß die Femsteuerelektronik 10 entsprechenden Abweichungen der Istwerte von Sollwerten selbsttätig entgegensteuern bzw. -regeln kann.

Die in dem Ausführungsbeispiel dargestellte Ansteuerung einer Fahrpedals ist lediglich beispielhaft. Statt dessen ist auch eine Ansteuerung einer oder mehrerer beliebiger anderer Steuerfunktionen des Crashfahrzeuges möglich, wie beispielsweise der Lenkung, der Schaltung undloder der Bremse.

## Patentansprüche

1. Betätigungsanordnung zur Geschwindigkeits- und/oder Lagebeeinflussung von selbstfahrenden Crashfahrzeugen, wobei eine nachgerüstete Steuerelektronik (10) zum selbsttätigen Steuern des Crashfahrzeuges in diesem vorgesehen ist,
**dadurch gekennzeichnet, daß**
die Steuerelektronik (10) mit wenigstens einer fahrzeugeigenen manuellen oder Fussbedienbaren Bedienungseinrichtung (18,20) wirkverbunden ist.

2. Betätigungsanordnung nach Anspruch 1,
**dadurch gekennzeichnet, daß**
die fahrzeugeigene manuelle Bedienungseinrichtung (18) ein Fahrpedal, ein Lenkrad, ein Bremspedal, ein Kupplungspedal und/oder ein Schalthebel, ist.

3. Betätigungsanordnung nach Anspruch 2,
**dadurch gekennzeichnet, daß**
zwischen der Steuerelektronik (10) und der manuellen Bedienungseinrichtung (18) ein Aktuator (14), insbesondere ein elektromechanischer oder elektropneumatischer Aktuator, angeordnet ist, welcher elektrisch mit der Steuerelektronik (10) und mechanisch mit der manuellen Bedienungseinrichtung (18) verbunden ist.

4. Betätigungsanordnung nach Anspruch 3,
**dadurch gekennzeichnet, daß**
die mechanische Verbindung (16) zwischen Aktuator (14) und manueller Bedienungseinrichtung (18) wenigstens einen Seilzug und ggf. wenigstens eine Umlenkrolle umfaßt.

5. Betätigungsanordnung nach einem der vorhergehenden Ansprüche,
**dadurch gekennzeichnet, daß**
die Steuerelektronik (10) ein Empfänger einer Femsteuerung ist.

6. Verfahren zur Geschwindigkeits- und/oder Lagebeeinflussung von selbstfahrenden Crashfahrzeugen,
**dadurch gekennzeichnet, daß**
wenigstens eine fahrzeugeigene manuelle oder Fussbedienbare Bedienungseinrichtung angesteuert wird.

7. Verfahren nach Anspruch 6,
**dadurch gekennzeichnet, daß**
die fahrzeugeigene manuelle Bedienungseinrichtung ein Fahrpedal, ein Lenkrad, ein Bremspedal, ein Kupplungspedal und/oder ein Schalthebel, ist.

## Claims

1. Actuating arrangement for influencing the speed and/or position of self-propelled crash test vehicles, a retrofitted electronic control system (10) for automatically controlling the crash test vehicle being provided in it, **characterized in that** the electronic control system (10) is operatively connected to at least one manual or foot-operated operator control device (18, 20) which is particular to the vehicle.

2. Actuating arrangement according to Claim 1, **characterized in that** the manual operator control device (18) which is particular to the vehicle is an accelerator pedal, a steering wheel, a brake pedal, a clutch pedal and/or a gear shift lever.

3. Actuating arrangement according to Claim 2, **characterized in that** an actuator (14), in particular an electromechanical or electropneumatic actuator, is arranged between the electronic control system (10) and the manual operator control device (18), said actuator (18) being electrically connected to the electronic control device (10) and mechanically connected to the manual operator control device (18).

4. Actuating arrangement according to Claim 3, **characterized in that** the mechanical connection (16) between the actuator (14) and manual operator control device (18) comprises at least one Bowden cable and, if appropriate, at least one deflection roller.

5. Actuating arrangement according to one of the preceding claims, **characterized in that** the electronic control system (10) is a receiver of a remote control system.

6. A method for influencing the speed and/or position of self-propelled crash test vehicles, **characterized in that** at least one manual or foot-operated operator control device which is particular to the vehicle is activated.

7. Method according to Claim 6, **characterized in that** the manual operator control device which is particular to the vehicle is an accelerator pedal, a steering wheel, a brake pedal, a clutch pedal and/or a gear shift lever.

## Revendications

1. Système d'actionnement pour influer sur la vitesse et/ou la position de véhicules sans chauffeur pour des essais de chocs,
dans lequel une électronique de commande (10) équipée en rattrapage est prévue pour la commande automatique du véhicule utilisé pour des essais de chocs dans celui-ci, **caractérisé en ce que** l'électronique de commande (10) est en liaison coopérante avec au moins un dispositif de manoeuvre (18, 20) actionnable au pied ou à la main propre au véhicule.

2. Système d'actionnement selon la revendication 1, **caractérisé en ce que** le dispositif de manoeuvre manuel propre au véhicule (18) est une pédale d'accélérateur, un volant de direction, une pédale de frein, une pédale d'embrayage et/ou un levier de sélection.

3. Système d'actionnement selon la revendication 2, **caractérisé en ce qu'**entre l'électronique de commande (10) et le dispositif de manoeuvre manuel (18) est disposé un actionneur (14), en particulier un actionneur électromécanique ou électropneumatique, qui est connecté électriquement à l'électronique de commande (10) et mécaniquement au dispositif de manoeuvre manuel (18).

4. Système d'actionnement selon la revendication 3, **caractérisé en ce que** la liaison mécanique (16) entre l'actionneur (14) et le dispositif de manoeuvre manuel (18) comprend au moins un câble Bowden et éventuellement au moins une poulie.

5. Système d'actionnement selon l'une quelconque des revendications précédentes, **caractérisé en ce que** l'électronique de commande (10) est un récepteur d'une télécommande.

6. Procédé pour influer sur la vitesse et/ou la position de véhicules sans chauffeur pour des essais de chocs, **caractérisé en ce qu'**au moins un dispositif de manoeuvre manuel ou actionnable au pied propre au véhicule est commandé.

7. Procédé selon la revendication 6, **caractérisé en ce que** le dispositif de manoeuvre manuel propre au véhicule est une pédale d'accélérateur, un volant de direction, une pédale de frein, une pédale d'embrayage et/ou un levier de sélection.
